(19) **Europäisches Patentamt / European Patent Office / Office européen des brevets**

(11) **EP 1 909 202 A1**

(12) **EUROPEAN PATENT APPLICATION**
published in accordance with Art. 153(4) EPC

(43) Date of publication:
**09.04.2008 Bulletin 2008/15**

(51) Int Cl.:
**G06F 17/30** (2006.01)    **G06F 7/00** (2006.01)

(21) Application number: **07720584.7**

(86) International application number:
**PCT/CN2007/001010**

(22) Date of filing: **28.03.2007**

(87) International publication number:
**WO 2007/140685 (13.12.2007 Gazette 2007/50)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **09.06.2006 CN 200610083581**

(71) Applicant: **Huawei Technologies Co., Ltd.**
**Longgang District, Shenzhen**
**Guangdong 518129 (CN)**

(72) Inventors:
- **YE, Fujun**
  **Shenzhen, Guangdong 518129 (CN)**
- **ZHANG, Qingjie**
  **Shenzhen, Guangdong 518129 (CN)**
- **SHAO, Gang**
  **Shenzhen, Guangdong 518129 (CN)**
- **ZHONG, Jieping**
  **Shenzhen, Guangdong 518129 (CN)**

(74) Representative: **Beresford, Keith Denis Lewis et al**
**BERESFORD & Co.**
**16 High Holborn**
**London WC1V 6BX (GB)**

(54) **SYSTEM AND METHOD FOR PRIORITIZING THE CONTENT OF WEB PAGES OFFERED BY MERCHANTS**

(57)    A system for determining the priorities of content providers includes a service data collecting and categorizing module and a content provider priority determining module. A method for determining the priority of content providers includes: determining the content category of service data information used by a user after detecting that the user uses service data; recording the information of the content category and a content provider identifier; and updating priority list covering different content providers in different content categories according to the information of the content category and the content provider identifier recorded. The technical solution of the present invention may display searching result which is arranged to the user according to the priority list covering different content providers in different content categories of the user corresponding to the searching request information, or recommend a service to the user according to the priority list covering different content providers in different content categories of the user. Information is provided to a user according to the personalized characteristics of the user, so that the user may enjoy the services provided by different content providers quickly and effectively.

Fig.1

EP 1 909 202 A1

**Description**

**Field of the Invention**

The present invention relates to network service technologies, and particularly, to a system and method for determining the priorities of content providers.

**Background of the Invention**

With the development of network technologies, network has become more and more indispensable in people's life. Various information may be seen everywhere in the network and people's life. The information includes useful information such as commodity information and special technology information as well as useless information such as junk e-mails and junk advertisements. It has become a common problem concerned by network content providers and users for a user to quickly find his or her interested information in a large mount of information so as to the user may quickly and effectively enjoy services provided in the network.

As for requirements advanced by users, many content providers have recently developed services for providing information to meet the requirements, for example, keyword searching of Google company and commodity recommendation of Amazon company. Many entertainment websites such as game, novel and movie websites may provide users with some recommended services such as displaying the most popular games, novels and movies in the home page of the websites to provide an index for the users to select. Moreover, the most popular content aggregation, i.e. Really Simple Syndication (RSS) news aggregation provides news content provided by multiple websites to a user, so that the user may browse news provided by the multiple websites via visiting one website and may enjoy a prompting service of news update.

In general, the conventional content providers consider all users as a whole while providing information according to requirements of users, i.e. provide same information according to different users with the same requirement. For example, the technology provided by Google company for displaying a searching result according to page-rank obtains the importance of a page according to the link condition of the page. The technology is designed for all users instead of providing an individualized measure for an individual user. When different users search information with the same keyword, all web pages including the keyword are displayed to different users in the same page-rank. However, various websites including the same keyword have their own characteristics. For example, some websites provide commodity information, some websites provide technology information, and some websites provide entertainment information. Different users have different requirements while searching with the same keyword. For example, some users buy commodities, some users want to know technical content, and some users search for entertainment content, which may not be expressed with a simple searching keyword. With a uniform page-rank, a user may find his or her desired information after clicking multiple links and browsing the content in a website, so that the user's searching time is greatly extended.

**Summary**

Embodiments of the present invention provide a system and a method for determining the priority of the content provider according to the personalized requirement of a user. Thus, the user is able to enjoy the services provided by the content provider quickly and effectively.

The technical scheme of the present invention is described as follows.

A system for determining priority of content providers includes:

a service data collecting and categorizing module, configured to collect and record service data information of different content providers used by a user, map the service data information to a corresponding content category, and output the information of the content category and a content provider identifier; and

a content provider priority determining module, configured to initialize a priority list covering different content providers in different content categories, and update the priority list covering different content providers in different content categories according to the information of the content category and the content provider identifier sent from the service data collecting and categorizing module.

A method for determining priority of content providers includes

determining the content category of service data information used by a user after detecting that the user uses service data;

recording the information of the content category and a content provider identifier; and

updating priority list covering different content providers in different content categories according to the information of the content category and the content provider identifier recorded.

Compared with the conventional method, the technical solution provided by the embodiments of the present invention maps service data information to a content category when collects service data information provided by a content provider, calculates the usage statistic information of different content providers in different content categories, and determines the priority list covering different content providers in different content categories for each user according to the obtained usage statistic information. Therefore, after receiving searching request of the user, the searching result is displayed to the user according to the priority list corresponding to the searching request, or a service is recommended to the user according to the priority list. In the embodiments of the present invention, the information is provided to a user according to the personalized characteristics of the user, so that the user may enjoy the service provided by a content provider quickly and effectively.

**Brief Description of the Drawings**

Figure 1 is a schematic diagram for illustrating a system for determining the priorities of content providers according to an embodiment of the present invention.

Figure 2 is a schematic diagram for illustrating a service data statistic module according to an embodiment of the present invention.

Figure 3 is a schematic diagram for illustrating a priority updating module for performing personal update according to an embodiment of the present invention.

Figure 4 is a schematic diagram for illustrating a priority updating module for performing clustering update according to an embodiment of the present invention.

Figure 5 is a simplified flowchart for determining the personal priority of a content provider according to the first embodiment of the present invention.

Figure 6 is a simplified flowchart for determining the personal priority of a content provider according to the second embodiment of the present invention.

Figure 7 is a simplified flowchart for determining the personal priority of a content provider according to the third embodiment of the present invention.

Figure 8 is a simplified flowchart for determining the clustering priority of a content provider according to the fourth embodiment of the present invention.

Figure 9 is a simplified flowchart for determining the clustering priority of a content provider according to the fifth embodiment of the present invention.

Figure 10 is a simplified flowchart for determining the clustering priority of a content provider according to the sixth embodiment of the present invention.

**Detailed Description of the Invention**

The present invention is illustrated in detail as follows with reference to the accompanying drawings and specific embodiments.

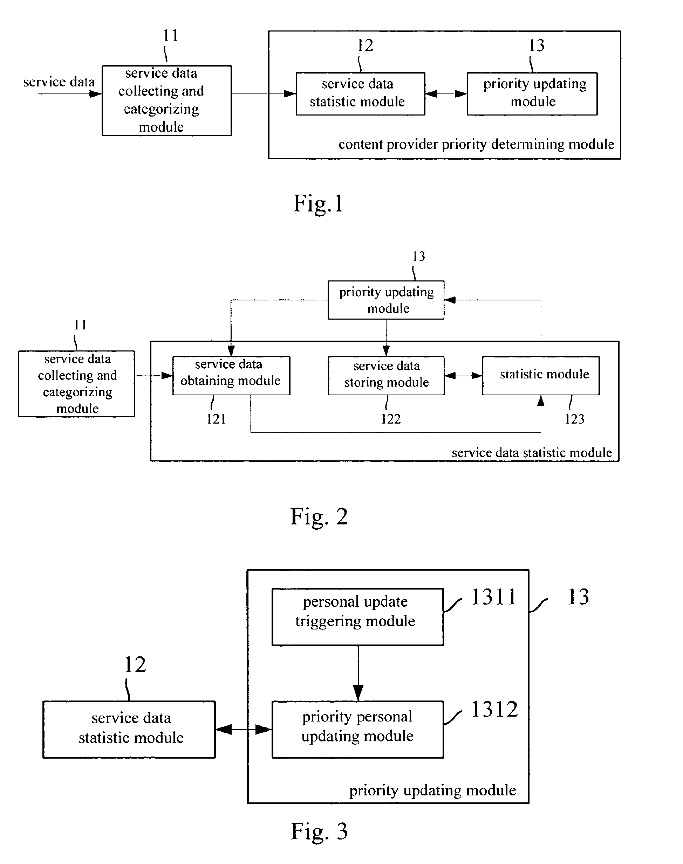

Figure 1 is a schematic diagram for illustrating a system for determining the priorities of content providers according to an embodiment of the present invention. Referring to Figure 1, the system mainly includes a service data collecting and categorizing module 11, a service data statistic module 12 and a priority updating module 13.

The service data collecting and categorizing module 11 is configured to collect and record service data information provided by different content providers and content provider identifier, map the service data information to a corresponding content category according to pre-determined corresponding relationship between the service data information and the content category, and send the content provider identifier and the content category to the service data statistic module 12.

The content provider identifier may be the name of a content provider, for example Sohu and Sina, or a digital ID allocated to each content provider.

The service data information may be network address information, whole web page information or video information, or content description information of web pages or videos. If the service data information is the network address information, the service data collecting and categorizing module 11 may pre-save corresponding relationship between the network address information and the content category, and determine the content category corresponding to the network address information according to the corresponding relationship. If the service data information is the web page information, whole video information or the content description information of web pages and videos, the service data collecting and categorizing module 11 may classify the content for the service data information according to the preset clustering method or the pre-obtained clustering rule.

The service data statistic module 12 is configured to update existing usage statistic information of the content provider in the content category according to the content category and the content provider identifier received from the service data collecting and categorizing module 11, and send the current usage statistic information of different content providers in different content categories to the priority updating module 13 after receiving an update triggering indication sent by the priority updating module 13.

The service data statistic module 12 may be located in client or server. If the service data statistic module 12 is located in the client, the service data statistic module 12 merely stores the content provider identifier and the content category of one user. If the service data statistic module 12 is located in the server, the service data statistic module 12 stores the content provider identifiers and the content category of all users, i.e. the service data statistic module 12 is required to store the corresponding relationship among a user identifier, content category and a content provider identifier.

If the update triggering indication sent by the priority updating module 13 carries the content category information, the service data statistic module 12 take the content category corresponding to the content category information in the update triggering indication as the content category should be updated. If the update triggering indication sent by the priority updating module 13 does not carry the content category information, the service data statistic module 12 takes all the content categories stored by itself as the content categories to be updated.

The usage statistic information may be the number of times for a user using the network service of a content category provided by a content provider.

The priority updating module 13 is configured to initialize priority list covering different content providers in different content categories, send the update triggering indication to the service data statistic module 12 when triggering an update event, and update existing priority list covering different content providers in different content categories according to usage statistic information received from the service data statistic module 12.

If the update event is triggered for a portion of all content categories, the priority updating module 13 sends an update triggering indication carrying information of the portion of the content categories to the service data statistic module 12. If the update event is triggered for all content categories, the priority updating module 13 sends to the service data statistic module 12 an update triggering indication without information of the content categories to indicate the service data statistic module 12 that priority lists covering different content providers in different content categories will be updated by the priority updating module 13.

In practical applications, the service data statistic module 12 and the priority updating module 13 are called a content provider priority determining module.

It should be noted that, the service data collecting and categorizing module 11 is located in the client. The service data statistic module 12 may be located in the client or the server, or one part of the service data statistic module 12 is located in the client and the other part of the service data statistic module 12 is located in the server. If the priority updating module 13 is configured to implement personal update function on a priority list, it may be located in a client or a server, or one part of the priority updating module 13 is located in the client and the other part of the priority updating module 13 is located in the server. If the priority updating module 13 is configured to implement clustering update function on a priority list, it may be located in the server, or one part of the priority updating module 13 is located in the client and the other part of the priority updating module 13 is located in the server.

Referring to Figure 2, one part of the service data statistic module 12 is located in a client and the other part of the service data statistic module 12 is located in a server. In this case, the service data statistic module 12 mainly includes a service data obtaining module 121, a service data storing module 122 and a statistic module 123. The service data obtaining module 121 may be located in the client or the server to acquire or collect transmitted data packages for analysis. The service data storing module 122 is located in the server, the statistic module 123 may be located in the server or be located in the client or the server as the priority updating module 13 does. The functions of the modules are described as follows.

The service data obtaining module 121 is configured to update usage statistic information of a content provider in a content category after the latest update trigger according to the content provider identifier and the information of the content category sent from the service data collecting and categorizing module 11, send the usage statistic information of different content providers in different content categories which is obtained after the latest updating to the statistic module 123 after receiving the update triggering indication sent from the priority updating module 13, and clear the usage statistic information of different content providers in different content categories.

As can be seen, the service data obtaining module 121 saves the usage statistic information which is obtained after latest updating, the content category information and the content provider identifier.

The service data storing module 122 is configured to send the usage statistic information of different content providers in different content categories which is obtained before the latest updating to the statistic module 123 after receiving the update triggering indication sent from the priority updating module 13, clear the usage statistic information of different content providers in different content categories, and save the usage statistic information of different content providers in different content categories which is sent by the statistic module 123.

As can be seen, the service data storing module 122 stores the usage statistic information which is obtained before the latest updating, the content provider identifier, and the information of the content category.

The statistic module 123 is configured to calculate the usage statistic information of different content providers in different content categories sent from the service data obtaining module 121 and the service data storing module 122, and send the acquired usage statistic information of different content providers in different content categories to the priority updating module 13 and the service data storing module 122.

Referring to Figure 3, if the priority updating module 13 is used for performing personal update on the priority list, the priority updating module 13 mainly consists of a personal update triggering module 1311 and a priority personal updating module 1312. The personal update triggering module 1311 may be located in a client or a server, and the priority personal updating module may be located in a client or a server. The functions of the modules are described as follows.

The personal update triggering module 1311 is configured to send a personal update triggering signal to the priority personal updating module 1312 after trigger of a personal update event.

The trigger of the personal update event may include reaching a preset personal update time, or receiving a personal update request sent by the user and so on. Different personal update frequencies may be adopted for the priority lists covering different content providers in different content categories. For example a higher update frequency may be adopted for updating the priority list covering different content providers in different content categories which is frequently used by a user while a lower update frequency may be adopted for updating the priority list covering different content providers in different content categories which is seldom used by the user.

If the priority personal updating module 1312 is located in the server, the personal update triggering module 1311 is configured to send the personal update triggering signal carrying a user identifier to the priority personal updating module 1312.

The priority personal updating module 1312 is configured to send a personal update triggering indication to the service data statistic module 12 after receiving the personal update triggering signal sent from the personal update triggering module 1311, and update the priority list covering different content providers in different content categories of the user according to the usage statistic information sent from the service data statistic module 12.

If the service data statistic module 12 is located in the server, the priority personal updating module 1312 is configured to send the personal update triggering indication carrying a user identifier to the service data statistic module 12.

The priority personal updating module 1312 maintains a priority list covering different content providers for each content category.

When the priority updating module 13 for performing the personal update on a priority list is located in the client, the server is further configured to include a personal priority list storing module 21. The personal priority list storing module 21 is configured to receive and store the priority list covering different content providers in different content categories of each user sent from the priority personal updating module 1312 belonging to each client, convert searching information into the information of the content category after receiving a searching request carrying the searching information sent from the user. And the personal priority list storing module is configured to send searching result which is arranged based on the priority list covering different content providers to the user according to the priority list covering different content providers in different content categories of the user saved by itself. Alternatively, the personal priority list storing module is configured to display the newest service information of the content category to recommend the service to the user according to the priority list covering different content providers in different content categories of each user. The newest service information of the content category is provided by different content providers whose values of priority are higher than a preset value.

The personal priority list storing module is configured to convert the searching information sent by the user to the information of the content category, and to map the searching information into the information of the content category according to a pre-determined clustering rule.

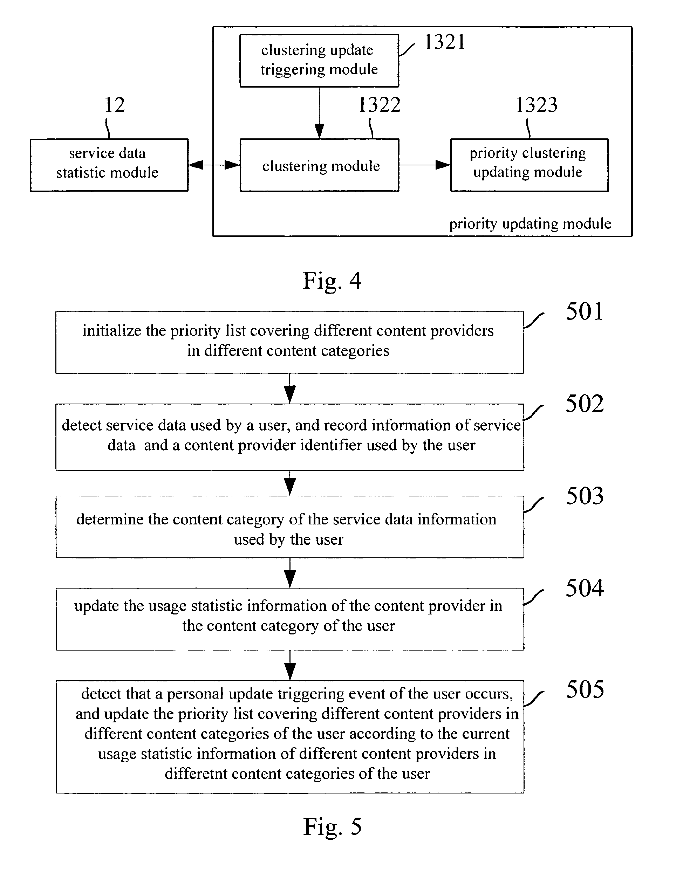

Referring to Figure 4, the priority updating module 13 for performing clustering update on a priority list mainly includes a clustering update triggering module 1321, a clustering module 1322 and a priority clustering updating module 1323. The clustering update triggering module 1321 may be located in a client or a server. The clustering module 1322 and the priority clustering updating module 1323 may be located in a server. The functions of the modules are described as follows.

The clustering update triggering module 1321 is configured to send a clustering update triggering signal to the clustering module 1322 after the trigger of a clustering update event.

The trigger of the clustering update event may include reaching a preset clustering update time, or receiving a clustering update request sent by the user and so on. Different clustering update frequencies may be adopted according to the priority list covering different content providers in different content categories.

The clustering module 1322 is configured to send a clustering update triggering indication to the service data statistic module 12 corresponding to all users after receiving the clustering update triggering signal, cluster the usage statistic information of different content providers in different content categories of all the users sent from the service data statistic module 12 corresponding to all the users. Therefore, the users are divided into different user groups, and the usage statistic information of different content providers in different content categories of each user and the user group identifier of each user are sent to the priority clustering updating module 1323.

Alternatively, the clustering module 1322 is configured to send a clustering update triggering indication to the service data statistic module 12 corresponding to all users after receiving the clustering update triggering signal, send the usage statistic information of different content providers in different content categories of each user to the priority clustering updating module 1323, and send the identifier of each user and the user group identifier of each user saved in itself and acquired from the latest clustering to the priority clustering updating module 1323.

The priority clustering updating module 1323 is configured to receive the usage statistic information and the user group identifier of different content providers in different content categories of each user sent from the clustering module 1322. The priority clustering updating module 1323 is further configured to update the priority list covering different content providers in different content categories of the user saved by itself according to the usage statistic information of different content providers in different content categories of the user and other users in the home user group of the user.

As for each content category of each user, the priority clustering updating module 1323 maintains a priority list covering different content providers, converts searching information to the content category after receiving a searching request carrying the searching information sent by a user. The priority clustering updating module 1323 further sends searching result which is arranged according to the priority list covering different content providers to the user according to the priority list covering different content providers in the content category of the user saved by itself, or displays the newest service information of the content category to recommend the service to the user according to the priority list covering different content providers in the content category of each user. The newest service information of the content category is provided by the content providers whose value of priority is higher than a preset value.

The priority clustering updating module 1323 is configured to convert the searching information sent by the user to the information of the content category, i.e. map the searching information into the information of the content category according to a pre-determined clustering rule.

In practical applications, the service data storing module 122 of the service data statistic module 12 further includes a priority information converting module. The priority information converting module is configured to receive a clustering update triggering indication sent by the clustering module 1322, and convert priority information of different content providers in different content categories which is obtained before the latest updating into the usage statistic information according to conversion relationship between the priority information and the usage statistic information saved by itself. The priority information converting module is further configured to send the usage statistic information to the statistic module 123, so that the statistic module 123 calculates the current usage statistic information of different content providers in different content categories of the user.

The priority clustering updating module 1323 is further configured to send the acquired priority list covering different content providers in different content categories of each user to the service data storing module 122 in the service data statistic module 12 corresponding to the user.

If the priority updating module 13 is configured to perform the personal update and the clustering update on a content provider priority list, the priority updating module 13 may consist of the personal update triggering module 1311 and the priority personal updating module 1312 as shown in Figure 3 as well as the clustering update triggering module 1321, the clustering module 1322 and a priority clustering updating module 1323 as shown in Figure 4.

Figure 5 is a simplified flowchart for determining the personal priority of a content provider according to the first embodiment of the present invention. As shown in Figure 5, the flow includes the following processes.

Block 501: The priority list covering different content providers in different content categories is initialized.

In embodiments of the present invention, the priority list covering different content providers in different content categories may be initialized for one time. When the priority list is updated for the first time, it may be updated based on the priority list covering different content providers in different content categories obtained through the initialization. When the priority list is updated for the second time and the following times, it may be updated according to the priority list covering different content providers in different content categories obtained by the latest update.

The block may be implemented through the following sub-blocks.

At first, content providers are categorized, and the corresponding relationship between each of the content providers and its home content category is saved.

In particular, the content providers may be categorized via the following four modes:

The first mode: The content providers determine their home content category according to network services which may be provided by the content providers.

The second mode: The content providers provide keywords of the network services that may be provided by the content providers to the operator. The operator categorizes the content providers according to the keywords provided by the content providers.

The third mode: The operator clusters the network services provided by the content providers to determine the content category of each of the content providers.

The fourth mode: Users categorize the content providers according to the network services provided by the content providers.

The content classification of content providers may be implemented through multiple levels. For example, the content providers may be first divided into entertainment, sports and special technology according to different types of network services provided by the content providers. Each category may be further divided into sub- category, for example the entertainment is further divided into movie, TV and drama. Each sub-category may also be further divided in detailed, for example the movie may be categorized into kung fu movie, literature movie, comedy movie and the like.

Thereafter, the priority list covering different content providers in different content categories is initialized.

In particular, the priority list covering different content providers in different content categories may be initialized via the following three modes.

The first mode: The initial priorities of different content providers are determined according to pre-obtained user click rate of different content providers. The higher the user click rate is, the higher the initial priorities are.

For example, the user click rate of the network service provided by different content providers in different content categories may be calculated in advance within a time period, or may be acquired via other ways. For example, the user click rate of the network service may be acquired from the different content providers.

The second mode: The initial priorities of different content providers are determined according to the pre-obtained influence of different content providers in different content categories. The wider scope of the influence is, the higher the initial priorities are.

For example, the influence of different content providers may be acquired through user survey.

The third mode: Service price, service quality and service range of the content provided by the content provider is evaluated. For example, a function about the service price, the service quality and service range is configured, and initial priorities of different content providers are determined according to the result of the integrated evaluation. The higher the value of the integrated evaluation is, the higher the initial priorities are.

For example, a basic service that may be provided by each of the content providers in different content categories is selected. The integrated evaluation for the service price, quality of service and service range provided by each of the content providers based on the basic service is performed.

The fourth mode: The initial priorities of different content providers in different content categories are set at the same value.

Block 502: Service data used by a user is detected, and the information of the service data used by the user and the content provider identifier are recorded.

Block 503: The content category of the information of the service data used by the user is determined.

The service data information may be network address information, information of a whole web page or information of a whole video, or content description information of web pages or videos. If the service data information is the network address information, the corresponding relationship between the network address information and the content category may be pre-determined, and then the content category corresponding to the network address information can be determined according to the corresponding relationship. If the service data information is the information of a whole web page, the information of a whole video, or the content description information of web pages or videos, the content classification for the service data information may be performed according to a preset clustering method or a pre-obtained clustering rule.

Block 504: The usage statistic information of the content provider in the content category of the user is updated.

The usage statistic information may be the usage time logs. As can be seen, the usage history for the network service provided by different content providers in different content categories used by each user is calculated in real time.

Block 505: When it is detected that a personal update triggering event of the user occurs, the priority list covering different content providers in different content categories of the user is updated according to the current usage statistic information of different content providers in different content categories of the user.

The personal update triggering event may include: reaching a preset personal update time, or receiving a personal update request sent by the user, etc. The personal update triggering event may be triggered by a client or a server. The personal update triggering event may be triggered for a portion of all content categories or for all the content categories at a time. The priority list covering different content providers in different content categories may be updated in different personal frequencies.

According to an embodiment of the present invention, searching query is converted into the content category upon the receipt of a searching request carrying the searching information sent by the user. The searching result is arranged and sent to the user based on the priority list covering different content providers according to the priority list covering different content providers in different content categories saved. Alternatively, after the priority list covering different content providers in a content category is updated, the newest service information of the content category provided by the content providers whose values of priority are higher than a preset value is output to the user according to the updated priority list covering different content providers in different content categories.

The personal update procedure for the priority list covering different content providers in a certain content category of a user is described as follows with tables. Table 1 and Table 2 are for listing the update of personal priority list covering different content providers for non-single used content categories. Table 3 and Table 4 are for listing the update of personal priority list covering different content providers for the single used content categories.

Table 1 shows the statistic list of number of times of usage, which is set for all content providers in a content category used by each user for a non-single used content category. U1, U2, U3,..., respectively represent different users, and CP1, CP2, CP3,..., respectively represent different content providers. The digits corresponding to User Ui (i=1, 2, ...) and CPj (j=1, 2, ...) represent the time for User Ui using the network service of the content category provided by Content Provider CPj.

|     | CP1 | CP2 | CP3 | CP4 | CP5 | CP6 | CP7 | CP8 | ... |
|-----|-----|-----|-----|-----|-----|-----|-----|-----|-----|
| U1  | 30  | 1   | 11  | 0   | 0   | 0   | 0   | 0   | ... |
| U2  | 7   | 0   | 9   | 0   | 0   | 36  | 13  | 8   | ... |
| U3  | 0   | 0   | 0   | 24  | 38  | 51  | 19  | 23  | ... |
| U4  | 11  | 0   | 2   | 0   | 37  | 21  | 0   | 0   | ... |
| ... | ... | ... | ... | ... | ... | ... | ... | ... | ... |

Table 1 shows the statistic list of number of times of usage, which is set for content providers in a content category for a non-single used content category.

Referring to Table 1, Table 2 is the priority list which shows the priority of different content providers in different content categories in each user. Each of the digits corresponding to User Ui (i=1, 2, ...) and CPj (j=1, 2,...) represents the priority of Content Provider CPj of the content category in User Ui.

|     | CP1 | CP2 | CP3 | CP4 | CP5 | CP6 | CP7 | CP8 | ... |
|-----|-----|-----|-----|-----|-----|-----|-----|-----|-----|
| U1  | 1   | 10  | 3   | 11  | 11  | 11  | 11  | 11  | ... |
| U2  | 8   | 11  | 6   | 11  | 11  | 1   | 4   | 7   | ... |
| U3  | 11  | 11  | 11  | 5   | 3   | 1   | 9   | 6   | ... |
| U4  | 7   | 11  | 10  | 11  | 1   | 4   | 11  | 11  | ... |
| ... | ... | ... | ... | ... | ... | ... | ... | ... | ... |

Table 2 is the priority list which shows the priority of different content providers in a content category in each user for a non-single used content category.

Table 3 shows the statistic list of number of times of usage, which is set for all content providers in a content category for a single used content category. If the digit corresponding to User Ui (i=1, 2,...) and CPj (j=1, 2,...) is 1, it represents User Ui uses the network service of the content category provided by Content Provider CPj. If the digit is 0, it represents User Ui does not use the network service of the content category provided by Content Provider CPj.

|     | CP1 | CP2 | CP3 | CP4 | CP5 | CP6 | CP7 | CP8 | ... |
|-----|-----|-----|-----|-----|-----|-----|-----|-----|-----|
| U1  | 1   | 1   | 1   | 0   | 0   | 0   | 0   | 0   | ... |
| U2  | 1   | 0   | 1   | 0   | 0   | 1   | 1   | 1   | ... |
| U3  | 0   | 0   | 0   | 1   | 1   | 1   | 1   | 1   | ... |

(continued)

|  | CP1 | CP2 | CP3 | CP4 | CP5 | CP6 | CP7 | CP8 | ... |
|---|---|---|---|---|---|---|---|---|---|
| U4 | 1 | 0 | 1 | 0 | 1 | 1 | 0 | 0 | ... |
| ... | ... | ... | ... | ... | ... | ... | ... | ... | ... |

Table 3 the statistic list of number of times of usage, which is set for all content providers in a content category for the single used content category.

Referring to Table 3, Table 4 is the priority list which shows the priority of different content providers in different content categories in each user. Each of the digits corresponding to User Ui (i=1, 2,...) and CPj (j=1, 2,...) represents the priority of CPj of the content category in User Ui. As can be seen, there are just two priority levels 1 and 2. If the user uses the network service of the content category provided by a content provider, the priority of the content provider is 1. If the user does not use the network service of the content category provided by a content provider, the priority of the content provider is 2.

|  | CP1 | CP2 | CP3 | CP4 | CP5 | CP6 | CP7 | CP8 | ... |
|---|---|---|---|---|---|---|---|---|---|
| U1 | 1 | 1 | 1 | 2 | 2 | 2 | 2 | 2 | ... |
| U2 | 1 | 2 | 1 | 2 | 2 | 1 | 1 | 1 | ... |
| U3 | 2 | 2 | 2 | 1 | 1 | 1 | 1 | 1 | ... |
| U4 | 1 | 2 | 1 | 2 | 1 | 1 | 2 | 2 | ... |
| ... | ... | ... | ... | ... | ... | ... | ... | ... | ... |

Table 4 is the priority list listing the priority of different content providers in one of content categories which are used for one time among users.

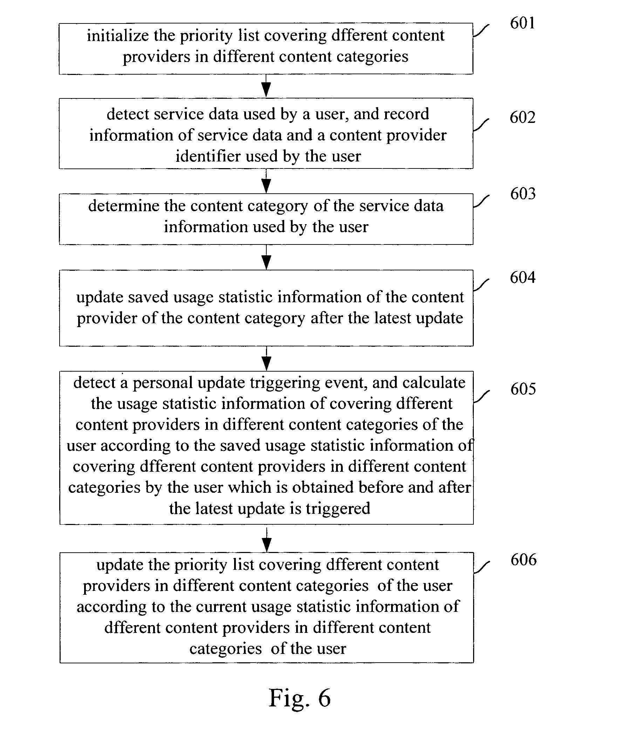

Figure 6 is a simplified flowchart for determining the personal priority of a content provider according to the second embodiment of the present invention. As shown in Figure 6, the procedure mainly includes the following processes.

Block 601: A priority list covering different content providers in different content categories is initialized.

Block 602: Service data used by a user is detected, and the information of the service data used by the user and a content provider identifier are recorded.

Block 603: The content category of the information of the service data used by the user is determined.

Block 604: The usage statistic information of the content provider in the content category is updated according to the information of the content category and the content provider identifier currently used by the user, and the usage statistic information of the content provider in the content category is obtained after the latest updating.

The latest update trigger may be a personal update or a clustering update.

Block 605: A personal update triggering event is detected. The usage statistic information of different content providers in different content categories of the user is calculated according to the usage statistic information of different content providers in different content categories of the user. The same statistic information of different content providers in different content categories of the user is obtained before and after the latest updating.

For example, if usage statistic time of different content providers in a content category of User U1 which is obtained before the latest updating is (30, 1, 11, 0, 0, 0...) and the usage statistic time of different content providers in different content categories of User U1 which is obtained after the latest updating is (2, 3, 1, 5, 4, 3 ...), the current usage statistic time of different content providers in different content categories of User U1 is (30, 1, 11, 0, 0, 0...)+ a*(2, 3, 1, 5, 4, 3...). Here, a is a rational number, and $0 < a \leq 1$.

Block 606: The priority list covering different content providers in different content categories of the user is updated according to the current usage statistic information of different content providers in different content categories of the user.

For example, if the usage statistic information is the usage statistic time, for a content category, the more the usage statistic time is, the higher the priority of content provider is.

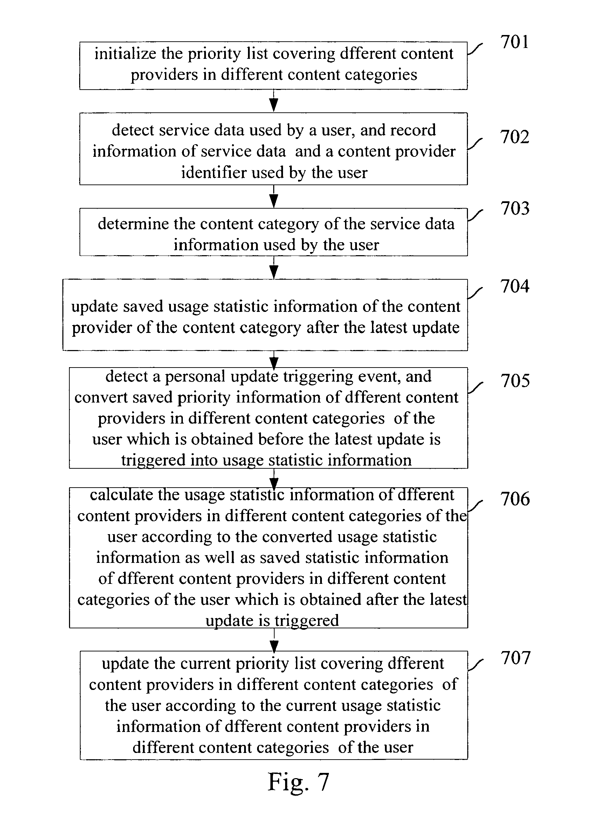

Figure 7 is a simplified flowchart for determining the personal priority of a content provider according to the third embodiment of the present invention. As shown in Figure 7, the procedure mainly includes the following processes.

Blocks 701~704 are the same as Blocks 601~604.

Block 705: A personal update triggering event is detected, and priority information of different content providers in different content categories of the user is converted into usage statistic information according to a corresponding relationship between the priority and the usage statistic information. The priority information of different content providers in different content categories of the user is obtained before the latest updating

The latest update trigger may be a personal update or a clustering update.

Block 706: The usage statistic information of different content providers in different content categories of the user is calculated according to the converted usage statistic information as well as statistic information of different content providers in different content categories of the user. The statistic information of different content providers in different content categories of the user is obtained after the latest updating.

For example, if the corresponding relationship between preset priority gr and usage statistic time ct is ct=21-gr, i.e. when gr=1, ct=20; when gr=2, ct=19, and the like. If the priority list covering different content providers in a content category of U1 which is obtained before the latest updating is (1, 10, 3, 11, 11, 11, ...), the corresponding statistic time is (20, 11, 18, 10, 10, 10, ...). If the statistic time for U1 using different content providers in the content category which is obtained after the latest updating is (2, 3, 1, 5, 4, 3, ...), the statistic time for U1 using different content providers in the content category is (20, 11, 18, 10, 10, 10, ...)+a*(2, 3, 1, 5, 4, 3, ...). Here, a is a rational number, and 0<a≤1.

Block 707: The current priority list covering different content providers in different content categories of the user is updated according to the current usage statistic information of different content providers in different content categories of the user.

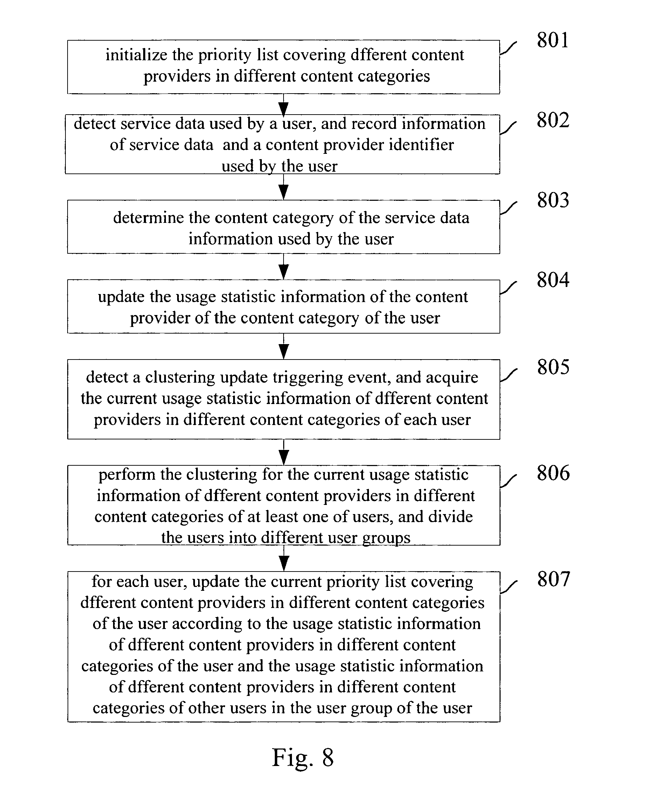

Figure 8 is a simplified flowchart for determining the clustering priority of a content provider according to the fourth embodiment of the present invention. As shown in Figure 8, the procedure mainly includes the following processes.

Blocks 801~804 are the same as Blocks 501-504.

Block 805: A clustering update triggering event is detected, and the current usage statistic information of different content providers in different content categories of each user is acquired.

The clustering update triggering event may include reaching a preset clustering update time, or receiving a clustering update request sent by the user and so on. The clustering update triggering event may be triggered by a client or a server. Each clustering update triggering event may be triggered for a portion of all content categories or for all the content categories. Different clustering update frequencies may be adopted for the priority lists covering content provider in different content categories.

Block 806: The current usage statistic information of different content providers in different content categories of at least one of users is clustered, and the users are divided into different user groups.

Block 807: For each user, the current priority list covering different content providers in different content categories of the user is updated according to the usage statistic information of different content providers in different content categories of the user and the usage statistic information of different content providers in different content categories of other users in the home user group of the user.

Block 806 may also be not performed, i.e. in Block 807, the priority list covering different content providers in different content categories of each user is updated according to the usage statistic information of different content providers in different content categories of each user and home user group of each user got from the latest clustering.

The procedure as shown in Figure 8 is described in detail with a detail example.

For example, as shown in Table 1, if Users U1, U2, U3 and U4 belong to the same user group, the procedure for updating the priority list covering different content providers in a certain content category of User U1 is as follows.

First: Distances or similarities between U1 and U2, U1 and U3, U1 and U4 are computed respectively.

There are many ways for computing the distance or similarity between users, for example Euclidean distance method, Pearson Correlation Coefficient method. For example, in Euclidean distance method, the equation for computing the distance Dist(Ui,U1) between Ui(i = 2,3,4) and U1 is:

$$\text{Dist}(Ui, U1) = \sqrt{\sum_{k=1}^{n} (M(i,k) - M(1,k))^2}.$$

Here, Ui(i = 2,3,4) represents U2, U3 or U4, k is the number of different content providers in the content category, k=1, 2, 3, ..., n is the total number of content providers, M(i, k) is the priority of content provider $CP_k$ of the content category in User Ui, and M(1,k) is the priority of content provider $CP_k$ in the content category in User U1.

In accordance with the priority list covering different content providers in the content category in each user shown in Table 2, the following equations may be obtained:

$$\text{Dist}(U2,U1) = \sqrt{\sum_{k=1}^{n}(M(2,k)-M(1,k))^2} = \sqrt{(8-1)^2+(11-10)^2+(6-3)^2+(11-11)^2+...}$$

$$\text{Dist}(U3,U1) = \sqrt{\sum_{k=1}^{n}(M(3,k)-M(1,k))^2} = \sqrt{(11-1)^2+(11-10)^2+(11-3)^2+(5-11)^2+...}$$

$$\text{Dist}(U4,U1) = \sqrt{\sum_{k=1}^{n}(M(4,k)-M(1,k))^2} = \sqrt{(7-1)^2+(11-10)^2+(10-3)^2+(11-11)^2+...}$$

Second: The influence weight $W_1$, $W_2$, $W_3$ and $W_4$ which U1, U2, U3 and U4 do for the usage statistic information of U1 is computed.

If $W_i$ = 1/Dist (Ui - U 1) and $i \neq 1$, $W_2$, $W_3$, $W_4$ are got. Supposing that $W_1$ = 0.5 , adjusting $W_2$, $W_3$ and $W_4$ according to $W_1 + W_2 + W_3 + W_4$ =1, $W_2$ = 0.1, $W_3$ = 0.2 and $W_4$ = 0.2 are obtained.

Third: The current usage statistic time Click (U1V{U2,U3,U4}) of U1 is computed.

$$\text{Click}(U1 \vee \{U2,U3,U4\}) = 0.5*(30,1,11,0,0,0,...)+0.1*(7,0,9,0,0,36,...)+0.2*$$
$$(0,0,0,24,38,51,...)+0.2*(11,0,2,0,37,21,...)$$

Fourth: The priority list covering different content providers in the content category of U1 is updated according the current usage statistic time of U1.

After the priority list covering different content providers in a content category of U1 is updated, the network service of the content category provided by the content provider, which is of a higher priority and is not used or seldom used by the user, may be recommended to the user according to the list of the content provider. For example, if the priority list covering different content providers in a content category of User U1 before the clustering update is Yahoo, Sina, Yitang, IT world, ... and the priority list covering different content providers in the content category of User U1 after the clustering update is Yahoo, CCTV, Sohu, Sina, .... It may be seen that, the service of the content category of CCTV and Sohu may be recommended to User U1 after the clustering update.

After the network service of a content category of a content provider is recommended to the user, it is determined whether the number of times for the user using the network service of the content category provided by the content provider is greater than a preset usage time in a preset time period. If the number of times for the user using the network service of the content category provided by the content provider is not greater than a preset usage time, the network service of the content category of the content provider is not recommended to the user any more.

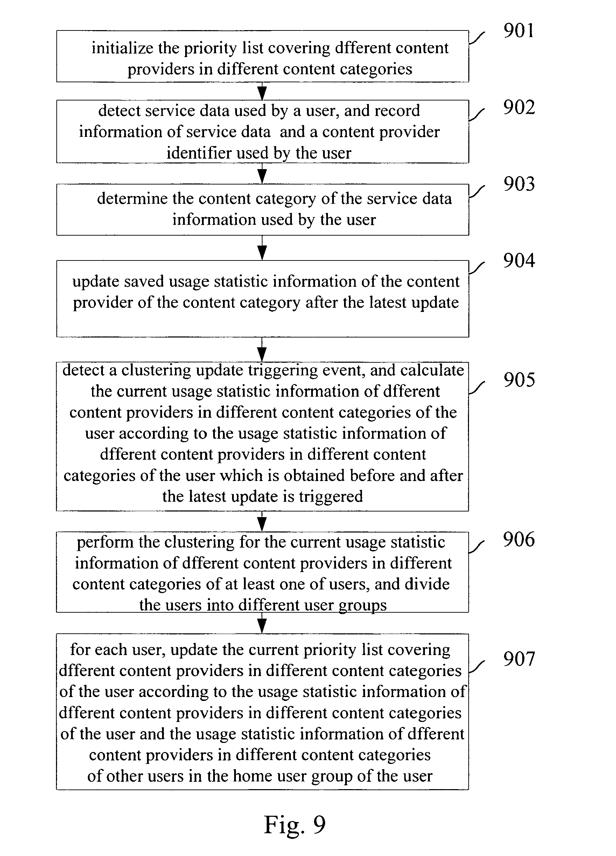

Figure 9 is a simplified flowchart for determining the clustering priority of a content provider according to the fifth embodiment of the present invention. As shown in Figure 9, the detailed processes are as follows.

Blocks 901~904 are the same as blocks 601~604.

Block 905: A clustering update triggering event is detected. The current usage statistic information of different content providers in different content categories of the user is calculated according to the usage statistic information of different content providers in different content categories of the user which is obtained before and after the latest updating.

Blocks 906~907 are the same as Blocks 806~807.

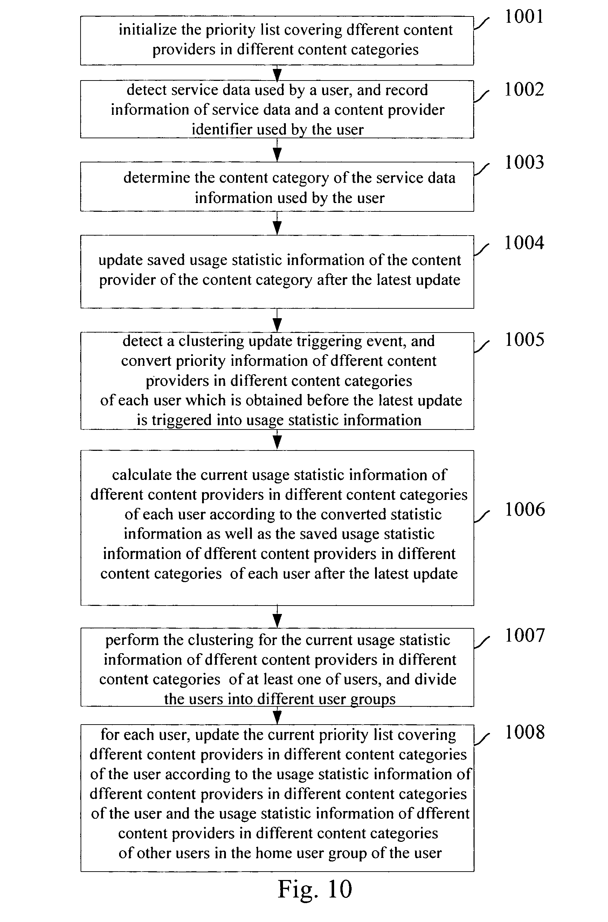

Figure 10 is a simplified flowchart for determining the clustering priority of a content provider according to the sixth embodiment of the present invention. As shown in Figure 10, the detailed processes are as follows.

Blocks 1001~1004 are the same as Blocks 701~704.

Block 1005: A clustering update triggering event is detected. The priority information of different content providers in different content categories of each user which is obtained before the latest updating is converted into usage statistic information according to corresponding relationship between the priority information and the usage statistic information.

Block 1006: The current usage statistic information of different content providers in different content categories of each user is calculated according to the converted statistic information as well as the usage statistic information of different content providers in different content categories of each user. The usage statistic information of different content providers in different content categories of each user is obtained after the latest updating.

Blocks 1007~1008 are the same as Blocks 806~807.

In practical applications, the personal update and the clustering update on the priority list covering different content providers in different content categories may be performed simultaneously or interactively. In this way, Blocks 505 just needs to be performed when the personal update triggering event occurs, and Blocks 805~807 are performed when the clustering update triggering event occurs.

The above are only preferred embodiments of the present invention, and are not for use in limiting the present invention. Any modification, equivalent replacement or improvement made under the spirit and principles of the present invention should be covered within the protection scope of the present invention.

**Claims**

1. A system for determining priorities of content providers comprising:

   a service data collecting and categorizing module, configured to collect and record service data information of different content providers used by a user, map the service data information to a corresponding content category, and output the information of the content category and a content provider identifier; and
   a content provider priority determining module, configured to initialize a priority list covering different content providers in different content categories, and update the priority list covering different content providers in different content categories according to the information of the content category and the content provider identifier sent from the service data collecting and categorizing module.

2. The system of Claim 1, wherein the content provider priority determining module comprises:

   a service data statistic module, configured to update usage statistic information of the content provider in the content category according to the information of the content category and the content provider identifier sent from the service data collecting and categorizing module, and output saved usage statistic information of different providers in different content categories to be updated according to an received update triggering indication; and
   a priority updating module, configured to initialize the priority list covering different content providers in different content categories, send the update triggering indication to the service data statistic module after the trigger of an update event, and update the priority list covering different content providers in different content categories to be updated according to the usage statistic information of different content providers in different content categories to be updated sent from the service data statistic module.

3. The system of Claim 1, wherein
   the service data collecting and categorizing module is located in a client.

4. The system of Claim 2, wherein
   the service data statistic module is located in a client or a server.

5. The system of Claim 2, wherein
   the priority updating module is located in a client or a server.

6. The system of Claim 2, wherein the service data statistic module comprises:

   a service data obtaining module, configured to update usage statistic information of the content provider in the content category according to the information of the content category and the content provider identifier sent from the service data collecting and categorizing module, wherein the usage statistic information of the content provider in the content category is obtained after the latest updating, output usage statistic information of the different content providers in different content categories as receiving the update triggering indication sent from the updating module, wherein the usage statistic information of the different content providers in the different content categories is obtained after the latest updating; and clear the usage statistic information of different content providers in different content categories to be updated; and
   a service data storing module, configured to output usage statistic information of the different content providers in different content categories as receiving the update triggering indication sent from the updating module, clear the usage statistic information of different content providers in different content categories to be updated, and save usage statistic information of the different content providers in different content categories sent from a statistic module, wherein the usage statistic information of the different content providers in different content categories is obtained before the latest updating; and

the statistic module, configured to calculate the usage statistic information of the different content providers in different content categories sent from the service data obtaining module and the service data storing module, and send obtained usage statistic information of the different content providers in different content categories to the updating module and the service data storing module.

7.  The system of Claim 6, wherein
the service data obtaining module is located in a client or a server;
the service data storing module is located in a server; and
the statistic module is located in a server, or located in a client or a server with the priority updating module.

8.  The system of Claim 2, wherein the priority updating module comprises:

a personal update triggering module, configured to send a personal update triggering signal to a priority personal updating module after the trigger of a personal update event; and
the priority personal updating module, configured to send a personal update triggering indication to the service data statistic module according to the personal update triggering signal sent from the personal update triggering module, and update the priority list of the user covering the different content providers in the different content categories according to the usage statistic information of the different content providers in the different content categories of the user sent from the service data statistic module.

9.  The system of Claim 8, wherein
the personal update triggering module is located in a client or a server, and
the priority personal updating module is located in a client or a server.

10. The system of Claim 8, wherein the priority personal updating module is located in a client; the system further comprising:

a personal priority list storing module located in the server, configured to receive and store the priority list covering the different content providers in the different content categories of each user sent from the priority personal updating module of each client.

11. The system of any of Claims 2, 8, 9 and 10, wherein the priority updating module comprises:

a clustering update triggering module, configured to send a clustering update triggering signal to a clustering updating module after the trigger of a clustering update event;
the clustering module, configured to send a clustering update triggering indication to the service data statistic module corresponding to each user as receiving the clustering update triggering signal, and send to a priority clustering updating module the usage statistic information of the different content providers in the different content categories of each user and a user group identifier, wherein the user group identifier is acquired according to the clustering of the usage statistic information of the different content providers in the different content categories of each user sent from the service data statistic module corresponding to each user, or the result of the latest clustering saved in the clustering module;
the priority clustering updating module, configured to receive the usage statistic information of the different content providers in the different content providers and the user group identifier sent from the clustering module, update the priority list covering the different content providers in the different content categories of the user according to the usage statistic information of the different content providers in the different content categories of the user and the usage statistic information of the different content providers in the different content categories of other users which are in the same user group with the user.

12. The system of Claim 11, wherein the service data statistic module further comprises:

a priority information converting module, configured to convert priority information of the different content providers in the different content categories of the user into usage statistic information upon receiving the clustering update triggering indication sent from the clustering module, wherein the priority information of the different content providers in the different content categories of the user is obtained before the latest updating, and calculate the converted usage statistic information and usage statistic information of the different content providers in the different content categories of the user, wherein the usage statistic information of the different content providers in the different content categories of the user is obtained after the latest updating, and send the obtained usage statistic information of the different content providers in the different content categories of the user to the clustering module; wherein

the priority clustering updating module is further configured to send the obtained priority list covering the different content providers in the different content categories of each user to the service data statistic module corresponding to each user.

13. The system of Claim 11 or 12, wherein
the clustering update triggering module is located in a client or a server;
the clustering module is located in a server; and
the priority clustering updating module is located in a server.

14. The system of Claim 2, wherein
the priority updating module is further configured to convert searching information into the information of content category after receiving a searching request carrying the searching information, and send searching result which is arranged according to priority list covering different content providers to the client, according to the priority list covering the different content providers in different content categories of the user corresponding to the client.

15. The system of Claim 11, wherein
the priority updating module is further configured to send the newest service information of the content category provided by different content providers whose values of priority are larger than a preset value to the client corresponding to the user according to the priority list covering the different content providers in the different content categories of each user.

16. A method for determining priorities of content providers comprising:

determining the content category of service data information used by a user after detecting that the user uses service data;
recording the information of the content category and a content provider identifier; and
updating priority list covering different content providers in different content categories according to the information of the content category and the content provider identifier recorded.

17. The method of Claim 16, further comprising:

determining different content providers corresponding to different content categories; and
determining initial priorities of the different content providers in the different content categories.

18. The method of Claim 17, wherein the process of determining different content providers corresponding to different content categories comprises:

determining, by the different content providers, their home content categories according to network services provided by the content providers; or
providing, by the different content providers, keywords of network services that may be provided by the content providers to an operator, and classifying, by the operator, content categories for the content providers according to the keywords provided by the content providers; or
clustering, by the operator, information of network services provided by the content providers, and obtaining the content categories of the different content providers; or
classifying, by the user, the content categories for the content providers according to the network services provided by the content providers.

19. The method of Claim 17, wherein the process of determining the initial priorities of the different content providers in the different content categories comprises:

determining the initial priorities of the different content providers according to user click rate of the different content providers; or

determining the initial priorities of the different content providers according to influence of the different content providers in the different content categories; or

evaluating network services provided by the different content providers, determining the initial priorities of the different content providers according to the result of the evaluation; or

setting the initial priorities of the different content providers in the different content categories at a same value.

20. The method of Claim 16, wherein the information of service data comprises at least one of network address information of the different content providers, web page information or video information provided by the content providers, and content description information of the web pages or videos provided by the content providers.

21. The method of Claim 16, after determining the content category of the service data information used by the user and before updating the priority list covering different content providers in different content categories; further comprising: triggering, by the user, a personal update triggering event for the content categories to be updated; wherein the process of updating the priority list covering the different content providers in the different content categories comprises:

updating the priority list covering the different content providers in the different content categories of the user according to usage statistic information of the different content providers in the different content categories of the user.

22. The method of Claim 21, wherein the triggering of a personal update triggering event comprises at least one of:

initiating, by the user, a personal update request for the different content categories, reaching a preset personal update time, and initiating, in a server, a personal update request for the different content categories.

23. The method of Claim 21, wherein the process of updating the priority list covering the different content providers in the different content categories comprises:

calculating the current usage statistic information of the different content providers in the different content categories of the user according to the usage statistic information of the different content providers in the different content categories of the user, wherein the usage statistic information of the different content providers in the different content categories of the user is obtained before and after the latest updating, and updating the priority list covering the different content providers in the different content categories of the user according to the current usage statistic information;

after updating the priority list covering the different content providers in the different content categories, the method further comprises:

saving the current usage statistic information of the different content providers in the different content categories of the user, and clearing the usage statistic information of the different content providers in the different content categories of the user which is obtained before and after the latest updating.

24. The method of Claim 21, wherein the process of updating the priority list covering the different content providers in the different content categories comprises:

converting priority information of the different content providers in the different content categories of the user into usage statistic information, wherein the priority information of the different content providers in the different content categories of the user is obtained before the latest updating, calculating the current usage statistic information of the different content providers in the different content categories of the user according to the usage statistic information of the different content providers in the different content categories of the user which is obtained before and after the latest updating, and updating the priority list covering the different content providers in the different content categories of the user according to the current usage statistic information;

after updating the priority list covering the different content providers in the different content categories, the method further comprises:

clearing the priority list covering the different content providers in the different content categories of the user which is obtained before the latest and the usage statistic information of the different content providers in the different content categories of the user which is obtained after the latest updating.

25. The method of Claim 23 or 24, wherein process of calculating the current usage statistic information of the different content providers in the different content categories of the user according the usage statistic information of the different content providers in the different content categories of the user which is obtained before and after the latest updating comprises:

$$Z=X+y*Y;$$

wherein y is a rational number, and $0<y\leq 1$; Z is the current usage statistic information of the different content providers in the different content categories of the user; X is the usage statistic information of the different content providers in the different content categories of the user which is obtained before the latest updating; Y is the statistic information of the different content providers in the different content categories of the user which is obtained after the latest updating; X and Y are n order vector, and n is the number of the content providers in the different content categories.

26. The method of Claim 16, after determining the content category of the service data information used by the user and before updating the priority list covering different content providers in different content categories, further comprising: triggering a clustering update triggering event; wherein
the process of updating the priority list covering the different content providers in the different content categories comprises:

   updating the priority list covering the different content providers in the different content categories according to the usage statistic information of the different content providers in the different content categories of all users.

27. The method of Claim 26, wherein the process of updating the priority list covering the different content providers in the different content categories comprises:

   clustering the current usage statistic information of the different content providers in the different content categories of all users, dividing all the users into different user groups; and updating the current priority list covering the different content providers in the different content categories of the user according to the usage statistic information of the different content providers in the different content categories of a user and the usage statistic information of the different content providers in the different content categories of other users in the home user group of the user; or
   searching the home user group of all the users in the result of the latest clustering, and updating the current priority list covering the different content providers in the different content categories of the user according to the usage statistic information of the different content providers in the different content categories of the user and the usage statistic information of the different content providers in the different content categories of other users in the home user group of the user.

28. The method of Claim 26, wherein the triggering of the clustering update triggering event comprises at least one of:

   initiating, by the user, a clustering update request for the different content categories, reaching a preset clustering update time, and initiating, in a server, a clustering update request for the different content categories.

29. The method of Claim 16, after updating the priority list covering different content providers in different content categories, further comprising:

   converting searching information into a content category upon receiving a searching request carrying the searching information sent from the user, and sending searching result which is arranged based on the priority list covering the different content providers, according to priority list covering the different content providers in the different content categories of the user.

30. The method of Claim 16, after updating the priority list covering different content providers in different content categories, further comprising:

   displaying the newest service information of the content category provided by the content providers whose values of priority are larger than a preset value to the user according to the priority list covering the different content providers in the different content categories of the user.

**31.** The method of Claim 16, wherein updating the priority list covering different content providers in different content categories comprises: updating a clustering priority list covering different content providers in different content categories;
after displaying the newest service information of the content category provided by a content provider whose priority is greater than a preset value, in different content categories, further comprising:

determining whether the number of times for the user using the service of the content category provided by the content provider is larger than a preset value; if the number of the times is less than the preset time, service information of the content category provided by the content provider is not displayed to the user any more.

11

service data → service data collecting and categorizing module

12
service data statistic module

13
priority updating module

content provider priority determining module

Fig.1

13
priority updating module

11
service data collecting and categorizing module

121
service data obtaining module

122
service data storing module

123
statistic module

service data statistic module

Fig. 2

1311
personal update triggering module

13

12
service data statistic module

1312
priority personal updating module

priority updating module

Fig. 3

```
                ┌──────────────────────────────┐
                │  ┌────────────────┐  ╱ 1321   │
                │  │ clustering update│          │
                │  │ triggering module│          │
   12           │  └────────────────┘  1322   1323
    \           │         │              \      \
┌──────────────┐│  ┌──────▼────────┐  ┌──────────────┐
│ service data ││  │               │  │ priority clustering│
│statistic module│◄┼─►│ clustering module│─►│ updating module│
└──────────────┘│  └───────────────┘  └──────────────┘
                │                                      │
                │                    priority updating module
                └──────────────────────────────────────┘
```

## Fig. 4

┌─────────────────────────────────────────────────────┐  ╱ 501
│  initialize the priority list covering different content providers │
│               in different content categories                      │
└─────────────────────────────────────────────────────┘
                            │
                            ▼
┌─────────────────────────────────────────────────────┐  ╱ 502
│ detect service data used by a user, and record information of service │
│        data  and a content provider identifier used by the user       │
└─────────────────────────────────────────────────────┘
                            │
                            ▼
┌─────────────────────────────────────────────────────┐  ╱ 503
│   determine the content category of the service data information  │
│                      used by the user                             │
└─────────────────────────────────────────────────────┘
                            │
                            ▼
┌─────────────────────────────────────────────────────┐  ╱ 504
│  update the usage statistic information of the content provider in │
│              the content category of the user                      │
└─────────────────────────────────────────────────────┘
                            │
                            ▼
┌─────────────────────────────────────────────────────┐  ╱ 505
│   detect that a personal update triggering event of the user occurs, │
│ and update the priority list covering different content providers in │
│   different content categories of the user according to the current  │
│    usage statistic information of different content providers in      │
│        differetnt content categories of the user                     │
└─────────────────────────────────────────────────────┘

## Fig. 5

```
┌─────────────────────────────────────────────┐
│  initialize the priority list covering dfferent content   │ ╱  601
│      providers in different content categories            │
└─────────────────────────────────────────────┘
                        │
                        ▼
┌─────────────────────────────────────────────┐
│   detect service data used by a user, and record         │ ╱  602
│   information of service data and a content provider      │
│           identifier used by the user                     │
└─────────────────────────────────────────────┘
                        │
                        ▼
┌─────────────────────────────────────────────┐
│   determine the content category of the service data     │ ╱  603
│            information used by the user                    │
└─────────────────────────────────────────────┘
                        │
                        ▼
┌─────────────────────────────────────────────┐
│  update saved usage statistic information of the content  │ ╱  604
│  provider of the content category after the latest update │
└─────────────────────────────────────────────┘
                        │
                        ▼
┌─────────────────────────────────────────────┐
│  detect a personal update triggering event, and calculate │ ╱  605
│    the usage statistic information of covering dfferent    │
│  content providers in different content categories of the │
│  user according to the saved usage statistic information of│
│   covering dfferent content providers in different content │
│   categories by the user which is obtained before and after│
│            the latest update is triggered                 │
└─────────────────────────────────────────────┘
                        │
                        ▼
┌─────────────────────────────────────────────┐
│   update the priority list covering dfferent content      │ ╱  606
│   providers in different content categories of the user   │
│   according to the current usage statistic information of  │
│    dfferent content providers in different content        │
│              categories of the user                       │
└─────────────────────────────────────────────┘
```

Fig. 6

```
┌─────────────────────────────────────────────┐       701
│  initialize the priority list covering dfferent content │ ╱
│     providers in different content categories          │
└─────────────────────────────────────────────┘
                       │
                       ▼
┌─────────────────────────────────────────────┐       702
│    detect service data used by a user, and record    │ ╱
│  information of service data  and a content provider  │
│           identifier used by the user                │
└─────────────────────────────────────────────┘
                       │
                       ▼
┌─────────────────────────────────────────────┐       703
│  determine the content category of the service data  │ ╱
│          information used by the user                │
└─────────────────────────────────────────────┘
                       │
                       ▼
┌─────────────────────────────────────────────┐       704
│  update saved usage statistic information of the content │ ╱
│  provider of the content category after the latest update │
└─────────────────────────────────────────────┘
                       │
                       ▼
┌─────────────────────────────────────────────┐       705
│     detect a personal update triggering event, and    │ ╱
│  convert saved priority information of dfferent content │
│     providers in different content categories  of the │
│   user which is obtained before the latest update is  │
│       triggered into usage statistic information      │
└─────────────────────────────────────────────┘
                       │
                       ▼
┌─────────────────────────────────────────────┐       706
│   calculate the usage statistic information of dfferent │ ╱
│ content providers in different content categories of the │
│     user according to the converted usage statistic   │
│     information as well as saved statistic information │
│     of dfferent content providers in different content │
│  categories of the user which is obtained after the latest │
│             update is triggered                      │
└─────────────────────────────────────────────┘
                       │
                       ▼
┌─────────────────────────────────────────────┐       707
│    update the current priority list covering dfferent │ ╱
│  content providers in different content categories  of │
│    the user according to the current usage statistic  │
│     information of dfferent content providers in      │
│      different content categories  of the user        │
└─────────────────────────────────────────────┘
```

Fig. 7

801

initialize the priority list covering dfferent content
providers in different content categories

802

detect service data used by a user, and record information
of service data and a content provider identifier
used by the user

803

determine the content category of the service data
information used by the user

804

update the usage statistic information of the content
provider of the content category of the user

805

detect a clustering update triggering event, and acquire
the current usage statistic information of dfferent content
providers in different content categories of each user

806

perform the clustering for the current usage statistic
information of dfferent content providers in different
content categories of at least one of users, and divide
the users into different user groups

807

for each user, update the current priority list covering
dfferent content providers in different content categories
of the user according to the usage statistic information
of dfferent content providers in different content
categories of the user and the usage statistic information
of dfferent content providers in different content
categories of other users in the user group of the user

Fig. 8

```
┌─────────────────────────────────────────────────┐
│        initialize the priority list covering dfferent content      │ ⟋ 901
│            providers in different content categories              │
└─────────────────────────────────────────────────┘
                          ▼
┌─────────────────────────────────────────────────┐
│        detect service data used by a user, and record          │ ⟋ 902
│        information of service data and a content provider       │
│                 identifier used by the user                    │
└─────────────────────────────────────────────────┘
                          ▼
┌─────────────────────────────────────────────────┐
│      determine the content category of the service data        │ ⟋ 903
│                 information used by the user                   │
└─────────────────────────────────────────────────┘
                          ▼
┌─────────────────────────────────────────────────┐
│       update saved usage statistic information of the content    │ ⟋ 904
│       provider of the content category after the latest update   │
└─────────────────────────────────────────────────┘
                          ▼
┌─────────────────────────────────────────────────┐
│   detect a clustering update triggering event, and calculate    │
│        the current usage statistic information of dfferent       │ ⟋ 905
│     content providers in different content categories of the    │
│        user according to the usage statistic information of     │
│           dfferent content providers in different content       │
│     categories of the user which is obtained before and after   │
│                 the latest update is triggered                 │
└─────────────────────────────────────────────────┘
                          ▼
┌─────────────────────────────────────────────────┐
│       perform the clustering for the current usage statistic     │ ⟋ 906
│        information of dfferent content providers in different    │
│      content categories of at least one of users, and divide    │
│              the users into different user groups             │
└─────────────────────────────────────────────────┘
                          ▼
┌─────────────────────────────────────────────────┐
│      for each user, update the current priority list covering    │
│   dfferent content providers in different content categories    │ ⟋ 907
│   of the user according to the usage statistic information of    │
│    dfferent content providers in different content categories    │
│   of the user and the usage statistic information of dfferent    │
│          content providers in different content categories      │
│        of other users in the home user group of the user       │
└─────────────────────────────────────────────────┘
```

Fig. 9

```
┌─────────────────────────────────────────────┐
│   initialize the priority list covering dfferent content  │  ⟋ 1001
│       providers in different content categories       │
└─────────────────────────────────────────────┘
                      ▼
┌─────────────────────────────────────────────┐
│      detect service data used by a user, and record      │  ⟋ 1002
│   information of service data and a content provider   │
│            identifier used by the user            │
└─────────────────────────────────────────────┘
                      ▼
┌─────────────────────────────────────────────┐
│   determine the content category of the service data   │  ⟋ 1003
│          information used by the user          │
└─────────────────────────────────────────────┘
                      ▼
┌─────────────────────────────────────────────┐
│   update saved usage statistic information of the content   │  ⟋ 1004
│   provider of the content category after the latest update   │
└─────────────────────────────────────────────┘
                      ▼
┌─────────────────────────────────────────────┐
│      detect a clustering update triggering event, and      │  ⟋ 1005
│        convert priority information of dfferent content        │
│           providers in different content categories           │
│   of each user which is obtained before the latest update   │
│         is triggered into usage statistic information         │
└─────────────────────────────────────────────┘
                      ▼
┌─────────────────────────────────────────────┐
│        calculate the current usage statistic information of        │
│   dfferent content providers in different content categories   │
│      of each user according to the converted statistic      │  ⟋ 1006
│            information as well as the saved usage statistic            │
│      information of dfferent content providers in different      │
│   content categories  of each user after the latest update   │
└─────────────────────────────────────────────┘
                      ▼
┌─────────────────────────────────────────────┐
│      perform the clustering for the current usage statistic      │  ⟋ 1007
│   information of dfferent content providers in different   │
│   content categories  of at least one of users, and divide   │
│           the users into different user groups           │
└─────────────────────────────────────────────┘
                      ▼
┌─────────────────────────────────────────────┐
│      for each user, update the current priority list covering      │  ⟋ 1008
│   dfferent content providers in different content categories   │
│   of the user according to the usage statistic information of   │
│   dfferent content providers in different content categories   │
│   of the user and the usage statistic information of dfferent   │
│           content providers in different content categories           │
│      of other users in the home user group of the user      │
└─────────────────────────────────────────────┘
```

## Fig. 10

<table>
<tr><td colspan="2"><div align="center"><strong>INTERNATIONAL SEARCH REPORT</strong></div></td><td>International application No.<br><br>PCT/CN2007/001010</td></tr>
</table>

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)

IPC: G06F17/30, G06F17/00,G06F7/00, G06F15/173, G06F15/00,G05B13/02, G05B13/00

Documentation searched other than minimum documentation to the extent that such documents are included in the fields searched

Electronic data base consulted during the international search (name of data base and, where practicable, search terms used)

WPI,EPODOC,PAJ,CNKI (NET, WEB, WEB W SITE, SEARCH+, RETRIEV+, QUER+, RANK+, PAGE W RANK, CLASSIF+, CATEGORY, PRIORITY, LIST, PERSONALITY, STATISTICS, BROWSE, UPDAT+)

**C. DOCUMENTS CONSIDERED TO BE RELEVANT**

| Category* | Citation of document, with indication, where appropriate, of the relevant passages | Relevant to claim No. |
|---|---|---|
| X | WO0146870A1(AMAZON.COM,INC.) 28 June 2001 (28.06.2001), line 5 of page 2- line 2 of page 3, line 25 of page 3- line 28 of page 8, abstract and FIGs.1,3,6,8 | 1-5,14,16-22,26,28-31 |
| A | | 6-13,15,23-25,27 |
| A | WO2005066844A2 (GOOGLE INC.) 21 July 2005 (21.07.2005), the whole document | 1-31 |
| A | US20050071465A1 (Hua-Jun Zeng et al.) 31 March 2005(31.03.2005), the whole document | 1-31 |

☒ Further documents are listed in the continuation of Box C.    ☒ See patent family annex.

| | |
|---|---|
| *    Special categories of cited documents: | "T"   later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"   document of particular relevance; the claimed invention cannot be considered novel or cannot be considered to involve an inventive step when the document is taken alone |
| "L"  document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"document member of the same patent family |

| Date of the actual completion of the international search<br><div align="center">10 May 2007(10.05.2007)</div> | Date of mailing of the international search report<br><div align="center"><strong>07 Jun. 2007 (07.06.2007)</strong></div> |
|---|---|
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br><div align="center">ZHAO,Xiangyang</div><br>Telephone No. (86-10)82336310 |

Form PCT/ISA /210 (second sheet) (April 2007)

<table>
<tr><td colspan="2"><strong>INTERNATIONAL SEARCH REPORT</strong></td><td colspan="2">International application No.<br>PCT/CN2007/001010</td></tr>
</table>

| | | |
|---|---|---|
| C (Continuation). | DOCUMENTS CONSIDERED TO BE RELEVANT | |

| Category* | Citation of document, with indication, where appropriate, of the relevant passages | Relevant to claim No. |
|---|---|---|
| A | US20020107853A1 (Thomas Hofmannet al.) 08 August 2002 (08.08.2002), the whole document | 1-31 |
| A | US20020040363A1（Gadi Wolfmanet al. 04 April 2002(04.04.2002), the whole document | 1-31 |
| A | US6738678B1（Krishna Asur Bharatet al.）18 May 2004 (18.05.2004), the whole document | 1-31 |
| A | CN1838117A(TENCENT(SHENZHEN) INC.) 27 September 2006 (27.09.2006), the whole document | 1-31 |

Form PCT/ISA /210 (second sheet ) (April 2007)

## INTERNATIONAL SEARCH REPORT
### Information on patent family members

| | International application No. |
|---|---|
| | PCT/CN2007/001010 |

| Patent Documents referred in the Report | Publication Date | Patent Family | Publication Date |
|---|---|---|---|
| WO0146870A1 | 28.06.2001 | AU4712601A | 03.07.2001 |
| | | EP1240605A1 | 18.09.2002 |
| | | US2003195877A1 | 16.10.2003 |
| | | US6785671B1 | 31.08.2004 |
| | | US2005004889A1 | 06.01.2005 |
| | | US6963867B2 | 08.11.2005 |
| | | US2005289140A1 | 29.12.2005 |
| | | US2006167864A1 | 27.07.2006 |
| WO2005066844A2 | 21.07.2005 | CA2552249A1 | 21.07.2005 |
| | | US2005165744A1 | 28.07.2005 |
| | | EP1700239A2 | 13.09.2006 |
| | | CN1918568A | 21.02.2007 |
| US20050071465A1 | 31.03.2005 | NONE | |
| US20020107853A1 | 08.08.2002 | US2004034652A1 | 19.02.2004 |
| | | US6687696B2 | 03.02.2004 |
| US20020040363A1 | 04.04.2002 | NONE | |
| US6738678B1 | 18.05.2004 | US7117206B1 | 03.10.2006 |
| CN1838117A | 27.09.2006 | NONE | |

Form PCT/ISA/210 (patent family annex) (April 2007)

**INTERNATIONAL SEARCH REPORT**

| International application No. |
| --- |
| PCT/CN2007/001010 |

CLASSIFICATION OF SUBJECT MATTER

G06F17/30(2006.01)i

G06F7/00(2006.01)i